# EUROPEAN PATENT APPLICATION

(11) **EP 0 797 162 A2**
(43) Date of publication of application: **24.09.1997**
(21) Application number: 97301935.9
(22) Date of filing: 21.03.1997
(51) Int. Cl.: G06F 17/30

(54) **Graphical user interface and display process for data segments in a computer database**

(30) Priority: 22.03.1996 US 620638
(71) Applicant: Pilot Software Inc, Cambridge, Massachusetts 02141 (US)
(72) Inventor: Stone, Emily M., Cambridge, Massachusetts 02139 (US); Bourgoin, Mario O., Cambridge, Massachusetts 02139 (US); Smith, Stephen J., Lynnfield, Massachusetts 01940 (US); Thearling, Kurt H., Somerville, Massachusetts 01450 (US)
(74) Representative: Garratt, Peter Douglas

(57) **Abstract**

A flexible navigational tool for a database is provided by using display objects for segments in the database which have visual characteristics based on values computed from database variables of entities in the segments. The visual characteristics include the size, position and appearance of the display objects. These visual characteristics may be determined according to segment values such as a segment aggregate for a database variable or a statistical measure associated with a segment which indicates the likelihood of whether an entity in the segment meets target conditions.

## Description

This invention is related to computer databases, for example, relational, object-oriented and multidimensional computer databases.

Computer database systems are becoming increasingly important for maintaining customer and other business information. There are many kinds of database systems, including relational databases, object-oriented databases and multidimensional databases. A multidimensional database is usually extracted from a larger relational database.

It has been recognized that many large databases, particularly databases with customer information, can be analyzed to find patterns which may be predictive. A customer database may be analyzed to identify a pattern of customer behaviour which in turn is used to make predictions about customer behaviour, for example. Patterns may be identified by classifying entities in a database into one or more segments according to some target condition of interest. Entities in a segment typically are relatively homogeneous with respect to the target condition. Such classification is sometimes called data mining.

The increased use of tools for analysing databases has created an increased need for suitable tools on the computer to improve the presentation and exposition of relationships among data.

A flexible navigational tool for a database is provided by using display objects for segments in the database which have visual characteristics based on values computed from database variables of entities in the segments. The visual characteristics include the size, position and appearance of the display objects. These visual characteristics may be determined according to segment values such as segment aggregates for database variables and a statistical measure associated with a segment which indicates the likelihood of whether an entity in the segment meets some target condition for a segment entity. Example statistical measures include one or more probabilities, an average measure or an average rate. Target conditions may be binary, continuous or categorical and may have one or more relevant statistical measures, such as an average, or a probability for each value of a categorical variable.

Accordingly, one aspect of the present invention is a graphical user interface for a computer database processing system which identifies segments of a computer database. A segment is defined by a selection criterion applied to entities in a database and a statistical measure, such as one or more probabilities that an entity in the segment meets target conditions or an average measure for a segment entity or an average rate for a segment entity. Application of a selection criterion to the database allows database variables for entities in the database to be aggregated for each segment. One example of an aggregate is a number of entities in a segment. Both the segment aggregates and the statistical measure associated with a segment are segment values which are computed from database variables of entities in the segment. The graphical user interface has a display object generator which receives one or more segment values and outputs the display object for each segment. Each display object has a size and appearance determined according to a segment value. For example the size may be determined by the number of entities in the segment, and the appearance may be determined by a statistical measure associated with the segment, such as a probability or an average. A display, connected to the display object generator, receives an indication of the display object for each segment and displays the display objects of the segments in an order determined by a segment value.

Another aspect of the invention is a computer-implemented process for generating a display for segments of a computer database, wherein segments are defined by a computer database processing system using a selection criterion applied to entities in the computer database. Each segment has an associated statistical measure, such as one or more probabilities that an entity in the segment meets a target condition or an average measure or average rate for a segment entity. Application of the selection criterion to the database allows database variables for entities in the database to be aggregated for each segment. Both the segment aggregates and the statistical measure associated with a segment are segment values which are computed from database variables of entities in the segment. The process includes the step of generating a display object for each segment. Each display object has a size and appearance determined according to a segment value. For example the size may be determined by the number of entities in the segment, and the appearance may be determined by the statistical measure associated with the segment. The process also includes the step of displaying the display object of each segment in an order determined by a segment value.

Another aspect of the invention is a multidimensional computer database in which segmentation is a dimension and in which each segment is an input member of the segmentation dimension.

An embodiment of the invention may provide for user selection of different factors, such as statistical measures and segment aggregates, to change the size, appearance and position of the display objects. The display objects may be rectangular in shape and may be displayed contiguously across a screen, defining what is called herein a segment bar. Other shapes and orientations may also be used, such as pie charts and bar charts. Given a user selection of a new order, size or appearance of display objects, the characteristics of the display objects may be recalculated and redisplayed for each segment.

The display objects may be individually selectable by a user using an input device associated with the computer and the display in which the display objects are presented. In response to a selection of an individual display object, a number of functions may be performed, such as displaying the selection criterion for the segment associated with each selected display object. Using a multidimensional database, if segmentation is a dimension of the database then segment aggregates of database variables may be viewed readily according to selected cross-sections of dimensions of the database.

In another embodiment of the invention, two or more segment bars or other kinds of collections of display objects are displayed on the screen. The first segment bar represents all of the segments within the database, or database portion, being viewed. The second segment bar is generated as if the segments shown are extracted from the database. Accordingly, the relative sizes and positions of the display objects for each of the segments is determined relative to the other selected segments. This provides a more focused view of particular selected segments. The first bar may show, in a highlighted form, which segments of the database are being represented by the second segment bar.

In another embodiment of the invention, the display objects are displayed adjacent to a corresponding table of the segments in which the segments are ranked according to a statistical measure or one of the segment aggregates of the database variables. A visual connection between the segment bar and the table may be made by generating a table display object for each segment. These table display objects generally have a uniform size, are placed adjacent to the label indicating the segment to which they are associated and have the appearance of the corresponding display object of the segment in the segment bar.

The visualization tools in the various aspects and embodiments of this invention assist a user of a database in navigating the database and viewing segments identified for the data. In particular, these visualization tools assist a user to identify quickly segments of importance. The invention also is applicable to many kinds of databases, such as relational databases, object-oriented databases, multidimensional databases, and even flat files extracted from such databases, which include an indication of a segment in which entities in the database occur. For example, a segment table indicating the segment in which each database entity is classified may be generated in a relational database.

The invention will now be described by way of example with reference to the accompanying drawings in which:-
FIG. 1 is a perspective view of a computer system having a display illustrating a visualization tool in one embodiment with the invention;
FIG. 2 is a block diagram of a computer system;
FIG. 3 is a schematic diagram of the memory system shown in FIG. 2;
FIG. 4 is a block diagram illustration of a database classification system;
FIG. 5 is an illustration of a segment definition, including a selection criterion and an associated statistical measure;
FIG. 6 is a graph illustrating the concept of a multidimensional database;
FIG. 7 is an illustration of an embodiment of a visualization tool in one embodiment of the invention;
FIG. 8 is a block diagram of a display object generator in one embodiment of the present invention;
FIG. 9 is a flow chart describing the operation of the display object generator of FIG. 8;
FIG. 10 is a block diagram of input and operation processing in one embodiment of the present invention;
FIG. 11 is a flow chart describing the operation processing of FIG. 10;
FIG. 12 is an illustration of a visualization tool in another embodiment of the present invention; and
FIGS. 13A and 13B are illustrations of alternative formats and arrangements of the display objects in the visualization tool.

The present invention will be more completely understood through the following detailed description which should be read in conjunction with the attached drawing in which similar reference numbers indicate similar structures. All references cited herein are hereby expressly incorporated by reference.

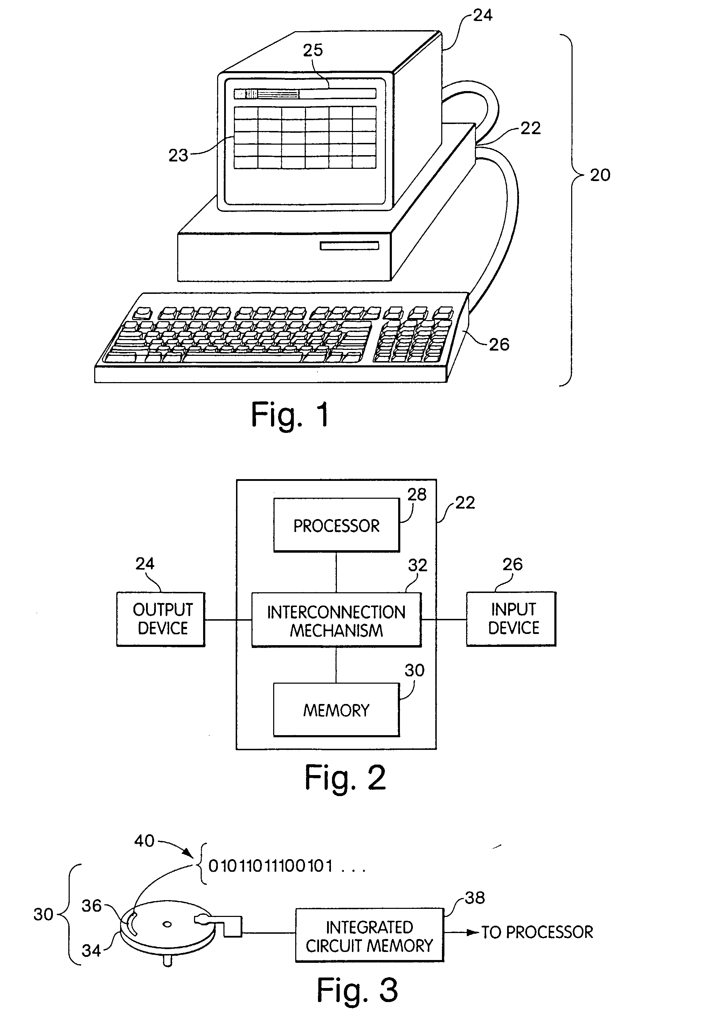

Referring now to FIG. 1, a computer system 20 includes an output display 24 which displays database information such as shown at 23 in association with a visualization or navigational tool 25. The computer system includes a main unit 22 connected to the output device 24 and an input device 26, herein shown as a keyboard. As shown in FIG. 2, the main unit 22 generally includes a processor 28 connected to a memory system 30 via an interconnection mechanism 32. The input device 26 is also connected to the processor and memory system via the connection mechanism, as is the output device 24.

It should be understood that one or more output devices may be connected to the computer system. Example output devices include a cathode ray tube (CRT) display, liquid crystal displays (LCD), printers, communication devices such as a modem, and audio output. It should also be understood that one or more input devices 26 may be connected to the computer system. Example input devices include a keyboard, keypad, track ball, mouse, pen and tablet, communication device, audio input and scanner. It should be understood the invention is not limited to the particular input or output devices used in combination with the computer system or to those described herein.

The computer system 20 may be a general purpose computer system which is programmable using a high level computer programming language, such as "C, or "Pascal." The computer system may also be specially programmed, special purpose hardware. In a general purpose computer system, the processor is typically a commercially available processor, of which the series x86 processors, available from Intel, and the 680X0 series microprocessors available from Motorola are examples. Many other processors are available. Such a microprocessor executes a program called an operating system, of which UNIX, DOS and VMS are examples, which controls the execution of other computer programs and provides scheduling, debugging, input/output control, accounting, compilation, storage assignment, data management and memory management, and communication control and related services. The processor and operating system define a computer platform for which application programs in high-level programming languages are written.

It should be understood the invention is not limited to a particular computer platform, particular processor, or particular high-level programming language. Additionally, the computer system 20 may be a multiprocessor computer system or may include multiple computers connected over a computer network.

An example memory system 30 will now be described in more detail in connection with FIG. 3. A memory system typically includes a computer readable and writable nonvolatile recording medium 34, of which a magnetic disk, a flash memory and tape are examples. The disk may be removable, known as a floppy disk, or permanent, known as a hard drive. A disk, which is shown in FIG. 3, has a number of tracks, as indicated at 36, in which signals are stored, typically in binary form, i.e., a form interpreted as a sequence of one and zeros such as shown at 40. Such signals may define an application program to be executed by the microprocessor, or information stored on the disk to be processed by the application program. Typically, in operation, the processor 28 causes data to be read from the nonvolatile recording medium 34 into an integrated circuit memory element 38, which is typically a volatile, random access memory such as a dynamic random access memory (DRAM) or static memory (SRAM). The integrated circuit memory element 38 allows for faster access to the information by the processor than does the disk 34. The processor generally manipulates the data within the integrated circuit memory 38 and then copies the data to the disk 34 when processing is completed. A variety of mechanisms are known for managing data movement between the disk 34 and the integrated circuit memory element 38, and the invention is not limited thereto. It should also be understood that the invention is not limited to a particular memory system.

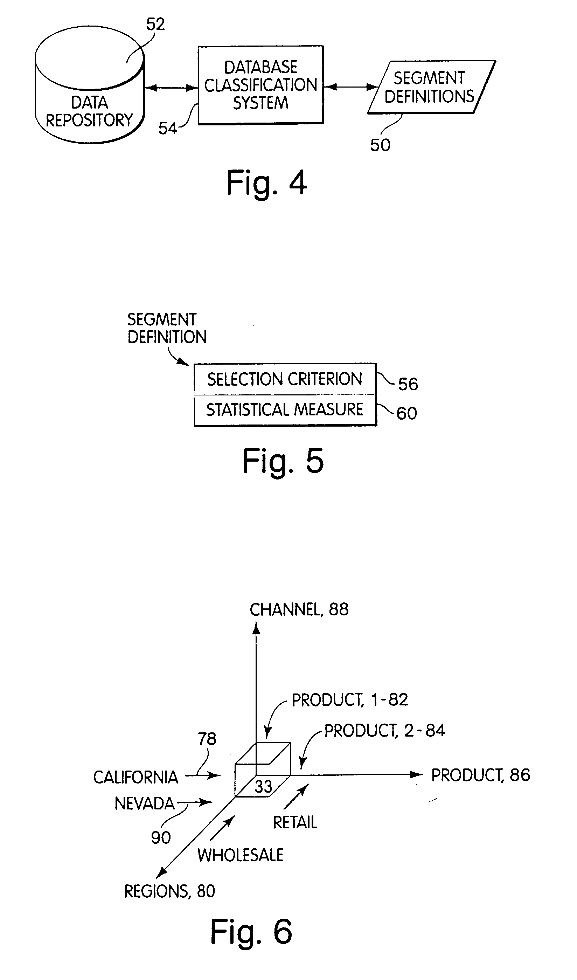

FIG. 4 is a block diagram illustrating a system which generates segment definitions 50 for at least one database 52 using a classification system tool 54. The classification system tool 54 classifies entities in the database into segments which are defined by selection criteria applied to the database entities. Each segment has an associated statistical measure that provides an indication of how well a database entity in the segment meets a target condition. There are many known techniques for determining the segments in data including genetic algorithms, neural network classifiers and classification and regression trees (CART). Classification and regression trees are described in more detail in Classification and Regression Trees by L. Breiman, et al. (Belmont, California: Wadsworth International Group, 1984). A classification system is also shown in U.S. Patent No. 4,719,571. Another classification system is also described in European Patent Application entitled "Computer System and Computer-Implemented Process for Classifying Records in a Computer Database," by filed on even date herewith. Predetermined segment definitions may also be applied to data, such as described in commonly-owned European Patent Application entitled "Computer System and Computer-Implemented Process for Applying Segment Definitions to a Database filed on even date herewith. A database and a classification system may be separate programs on separate machines or on the same machine. The database may be configured to be a server with which one or more client programs may interact. The client and server programs may be on the same machine or on different machines.

Referring now to FIG. 5, a segment is defined by a selection criterion, e.g., a rule, as indicated at 56. Another value associated with a segment is a statistical measure, as indicated at 60, which represents the likelihood that an entity in the segment meets target conditions. Example statistical measures include one or more probabilities that an entity meets target conditions, an average measure for a segment entity or an average rate for a segment entity. Other values associated with the statistical measure, such as standard deviation, variance or mean, may also be stored.

When a selection criterion defining a segment is applied to a database, segment aggregates of database variables may be determined. A segment aggregate of a database variable is a combination, such as a sum or average, over entities in a segment of a database variable maintained for each entity. An example of a segment aggregate is the number of entities in a segment. A segment aggregate may also indicate total purchases made by customers, where each customer is a database entity and a database variable is the total amount purchased by the customer in a given period of time. Segment aggregates are particularly easy to determine using a multidimensional database.

Referring again to FIG. 4, the database 52 may be a relational database, object-oriented database, multidimensional database, flat file or other set of data. Of particular interest is a multidimensional database in which segmentation information is a dimension. Multidimensional databases will now be briefly described in connection with their relation to relational databases. A relational databases is organized using tables of records. Each record contains related information that is organized into fields. Typical examples are customer lists wherein each customer or entity has one or more records containing fields for address, telephone number, and so on. Each item in a database that has a unique identifier, such as a customer, is considered an entity in the database. Each entity may have one or more associated records. A multidimensional database, on the other hand, is used to manipulate data for which there is more than a one-to-one correspondence among records and fields. A many-to-one or a many-to-many correspondence suggests that consolidations of related fields may be made. In such an instance, the data is amenable to representation in a multidimensional database.

For example, referring now to FIG. 6, given a set of products that are sold in several regions through several channels, sales data for the products in each region and channel, and the consolidation of sales data over all regions or over all products or over all channels, can be represented in a multidimensional database. In a multidimensional database, there are cells containing original source data called inputs. Computed totals are called outputs. Fields which are related define a dimension. Subcategories of a dimension are the members. The consolidation of data over the input members is the data value for the output member. In this example, a state, e.g., California (as indicated at 78) or Nevada (as indicated at 90), is an input member of a "Region" dimension, along axis 80. Similarly, each product sold (e.g., product 1 and product 2 as indicated at 82 and 84) is a member of a "product" dimension, along axis 86. A channel dimension is shown on axis 88 of which "wholesale" and "retail" are input members. The actual numbers of sales data represent a variable as shown within each cell defined by the axes. Variables may be numerical measures such as sales, costs, profits, expenses, and so forth. When variables for members in selected dimensions, are viewed as a multidimensional table or graph, the variables are referred to as being dimensioned by the selected dimensions. Dimensions are roughly equivalent to fields in a relational database; cells are roughly equivalent to records. FIG. 6 shows sales dimensioned by product, region and channel.

In one embodiment of the invention, segmentation is a dimension in a multidimensional database. Database variables may be dimensioned by any of a number of dimensions in the database, including the segmentation dimension. Even if the segmentation information is not within the database, it may be obtained from outside the database. For example, the segmentation information may be found in a data file or in a relational database.

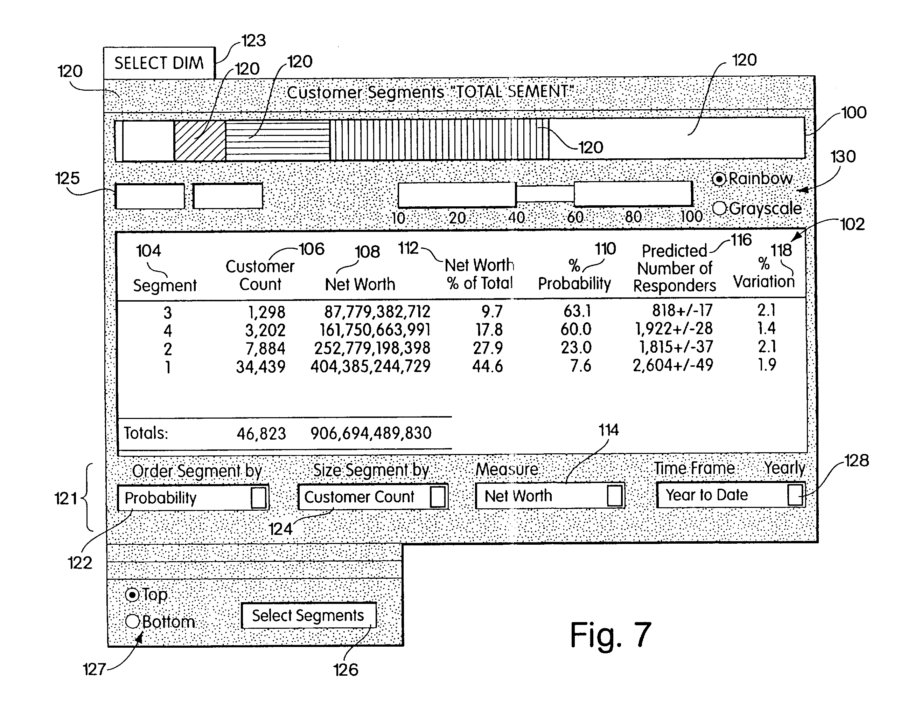

The display of a graphical user interface in one embodiment of this invention, as shown in FIG. 7, provides a navigational tool which utilizes the segmentation dimension in combination with other navigational tools of a multidimensional database to illustrate the database segmentation and further assist in navigating the database and identifying useful data.

FIG. 7 shows a table 102 representing, for each segment, the segment number as indicated at 104 and the count of the number of entities in the segment indicated at 106. Also shown for each segment is a statistical measure 110, e.g., a probability that an entity in this segment meets some target condition. Aggregates of a database variable may be viewed at 108. The percentage of the total of this aggregate over all segments is found in column 112. The aggregate may be selected using the "measure" selector as indicated at 114, which may be implemented as a drop-down menu, for example. A predicted number of responders also may be shown in 116, which is determined by applying the statistical measure 110 to the customer count 106. Responders are database entities which meet the target condition. The standard deviation may be used to illustrate the accuracy of this prediction as a "+/-" factor in column 116. A percentage variation may also be shown at 118, which indicates the ratio of the standard deviation to the predicted number of responders. The presentation of the segments in the database may be ordered by any of a number of factors related to the segment. For example, segments may be ordered by the statistical measures associated with the segments, the total counts or other segment aggregates of database variables.

A segment bar 100 is a navigational aid to assist in viewing and understanding the relationship among and relative importance of the segments. The segment bar 100 includes a display object 120 for each segment. The display objects 120 have three characteristics: size, appearance, and order. Each of these three factors of each display object may be based on one of a number of criteria. The size of a display object of a given segment is based on a value for the segment in relation to the corresponding values for other segments. For example, the size may be based on the relative customer counts, i.e., number of entities, or other segment aggregates over a database variable, such as total sales, or the relative statistical measures of the segments.

In the use of the present invention, the appearance of a display object 120 often is based on the statistical measure associated with the segment. The appearance may be a colour, a grey scale, or a set of patterns as determined by a colour map. A colour map selector, such as indicated at 130, may be used to determine the characteristics of the colour map. The appearance is typically based on a statistical measure associated with the segment, such as the probability that an entity in the segment meets a target condition, since this information is an important characteristic of a segment.

The position of each display object for each segment is selected according to an ordering of the segments by some factor. For example, they may be ordered by a segment aggregate, such as a number of entities or total sales, or they may be ordered by a statistical measure or other variable. The order defines a relative position of the display objects in the user interface. They may be ordered from left to right, right to left, horizontally, vertically as desired. In the embodiment shown in FIG. 7, the ordering is done from left to right and horizontally, with a highest probability first. Also in the example shown in FIG. 7, the size is determined according to the total count or number of entities, of the segment. The appearance is based on a statistical measure, in this case probability.

A selection indication region 121 is used to indicate the factors used to determine the order (position) and size of the display objects in the segment bar. These display factors may be made selectable by a user, for example by making a drop down menu as shown at 122 and 124. A button 127 may be used to control whether the order is ascending or descending. Additionally, the interface may include a selection button or menu option as shown at 121 to allow a user to further select members from other dimensions and further narrow the portion of the database being examined. A selection button 126 may allow a user to select a subset of segments to be displayed on the segment bar and in the table. The displayed variables may also be calculated by time frame as indicated at 128.

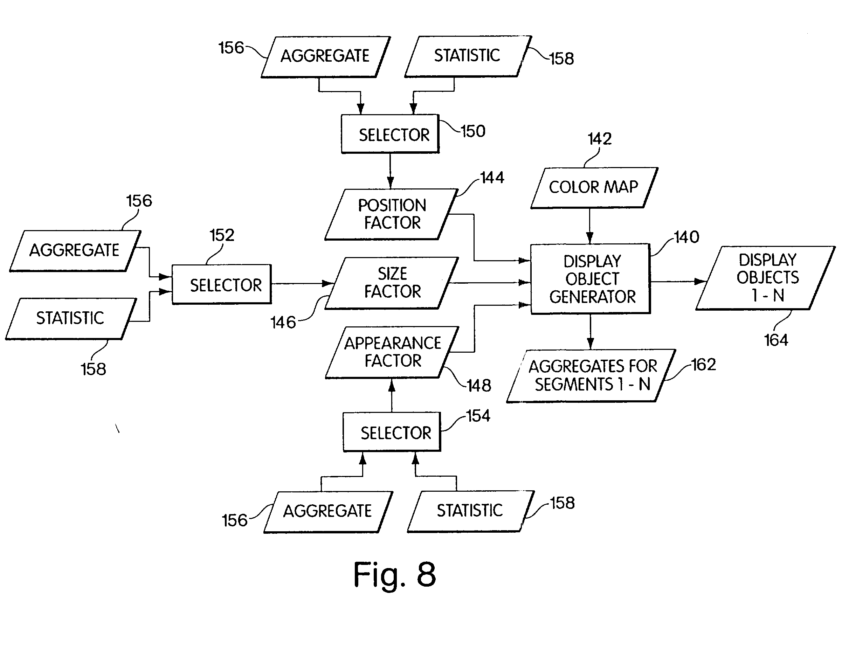

A data flow diagram illustrating one embodiment of how display objects are generated will now be described in connection with FIG. 8. FIG. 8 shows a display object generator 140 which receives a colour map selector 142, allowing selection of colour map characteristics. The colour map may be a grey scale colour map, may have a small number of colours or a large or nearly continuous number of colours, or may indicate patterns. The display object generator also receives an indication of a position factor 144, a size factor 146 and an appearance factor 148. These factors may come from selectors 150, 152 and 154. These selectors may be implemented for example using drop down menus as discussed above to allow a user to select one of a set of possible sources for the position, size and appearance factors. In this example, each selector 150, 152 and 154 selects between a segment aggregate 156 of a database variable, such as a total count or total sales, and a statistical measure 158. The appearance factor selector 154 may provide only the statistical measure, as in FIG. 7.

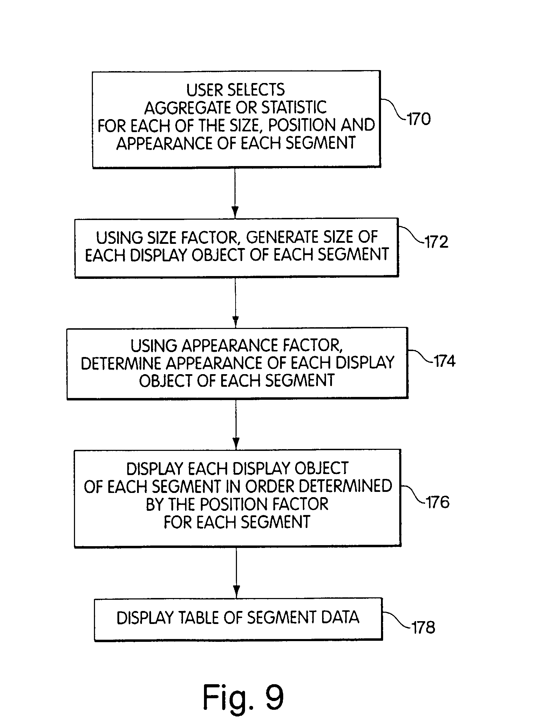

The display object generator 140 also receives aggregates of the database variables associated with the segments, as indicated at 162, which are displayed in the table 102. These database variables may be displayed for only a selected subset of the database. Using a multidimensional database, for example, the variable which is viewed may be dimensioned, for example by gender and state, allowing for selection of only male customers within a certain state. The variable may be total sales, for example. This variable may be further dimensioned by the segment information which is then received by the display object generator 140 to generate display objects for each of the segments as indicated at 164, but only for the selected members from the given dimensions. The generation of display objects by display object generator 140 will now be described in connection with FIG. 9. Referring now to FIG. 9, a first step 170 in generating the display objects is the selection of the size, position and appearance factors for the display objects. Size, position and appearance factors may be obtained by default value or by selection by the user. As discussed above, the size, position and appearance factors may be selected from a statistical measure and a segment aggregate over a database variable, such as total count. The selected appearance factor often is the statistical measure, since this information is particularly significant in making predictions. Using the size factor, the size of each display object is generated for each segment. As discussed above, the size of a display object is based on the relative size factor of the segment, in comparison to the size factors of other segments. The size is also determined by the display area and shape in which the display object is placed. For example, when the display object is placed in a segment bar such as shown at 100 in FIG. 7, the height of the display object is fixed, its shape is rectangular, and its width is a function of its size factor as compared to the total size factor for all segments. For example, if the segment bar is 640 pixels wide and the size factor for a segment is ten percent of the accumulated size factor over all segments, the display object would be 64 pixels wide.

Next, the appearance factor is determined for the segment according in step 174. The appearance factor of a segment is compared to the colour map which maps the possible range of appearance factors, (e.g., probability may be from zero to one or from zero to one hundred percent) to a range of colours, grey scale, patterns, or other appearance. The display object of a given size and appearance is then displayed in step 176 in an order determined by the position factor for each segment. The position factor is used to rank the segments in an order. The order determines where the object is placed, e.g., on a display screen. For example, the segment bar 100 of FIG. 7 positions the display objects in order from left to right, horizontally. They may be also ordered vertically. The table of associated segment data may also be displayed as indicated at step 178. This table may also be displayed prior to generation of the display objects.

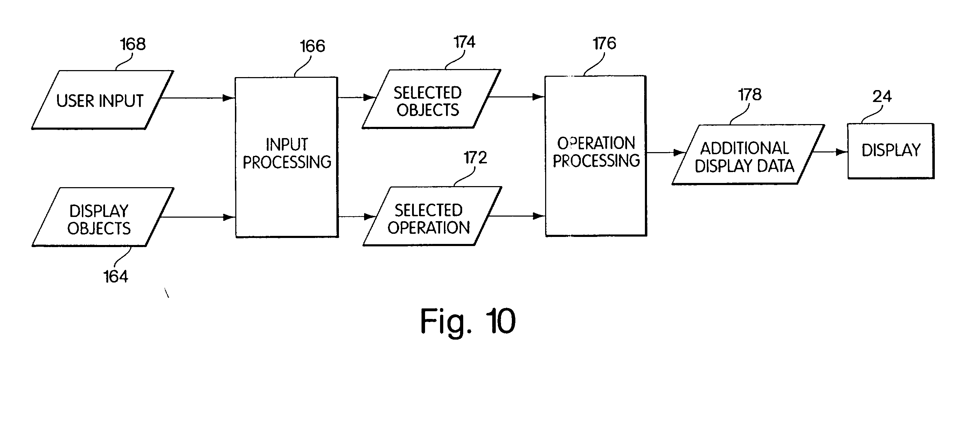

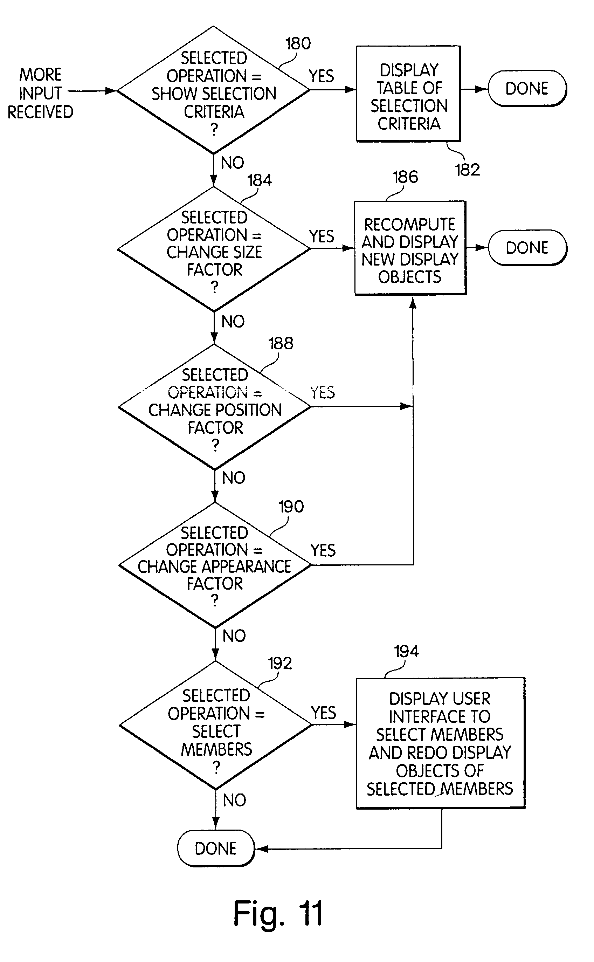

The use of the display objects for each segment to allow for further navigation or visualization of data will now be described in connection with the data flow diagram of FIG. 10. Using common techniques, one or more of the display objects may be made to be selectable by a user. For this purpose an input processing unit 166 is provided which receives user inputs 168 from the various input devices and indications of the locations and sizes of the display objects 164. Using user input 168 and display objects 164, a selected operation may be determined as indicated at 172 and any selected object may be identified as indicated at 174. A selected object, if any, and a selected operation 172 are provided to an operation processing system 176, described below in more detail in connection with FIG. 11. The results of the operation processing may be additional display data 172, or separate display data, which is then applied to the display 24.

Referring now to FIG. 11, the operation processing system 176 receives the indicated selected operation and performs one of a number of functions according to the selected operation. For example, if the selected operation indicates that the user wants to see the selection criteria of a segment, as determined at 180, a table of selection criteria for the segments corresponding to the selected display objects is displayed as indicated at 182. Such an operation may be performed in response to a user selection of a "rules" button, such as shown at 125 in FIG. 7. If the selected operation involves changing the size factor of the display objects, as indicated at step 184, new display objects are recomputed and displayed at step 186. Similarly, the selected operation may be a change in the position factor as indicated at step 188 or a change in the appearance factor as determined in step 190. In either case, new display objects are recomputed and displayed, as indicated at 186. Another possible operation, as determined in steps 192, is the selection of members of a dimension of the database, which allows a subset of the database to be viewed. In response to a request from a user to select members of a dimension, user interface may be displayed, as indicated at step 194, to allow the user to make such a selection. The segment values associated with the segments are then recomputed, and the display objects of the segments are recomputed and redisplayed according to the recalculated segment values as restricted the selected members of a selected dimension. There are many other kinds of operations. For example, a user may select certain display objects and request recalculation and redisplay of these objects as restricted to the segments associated with the selected display objects.

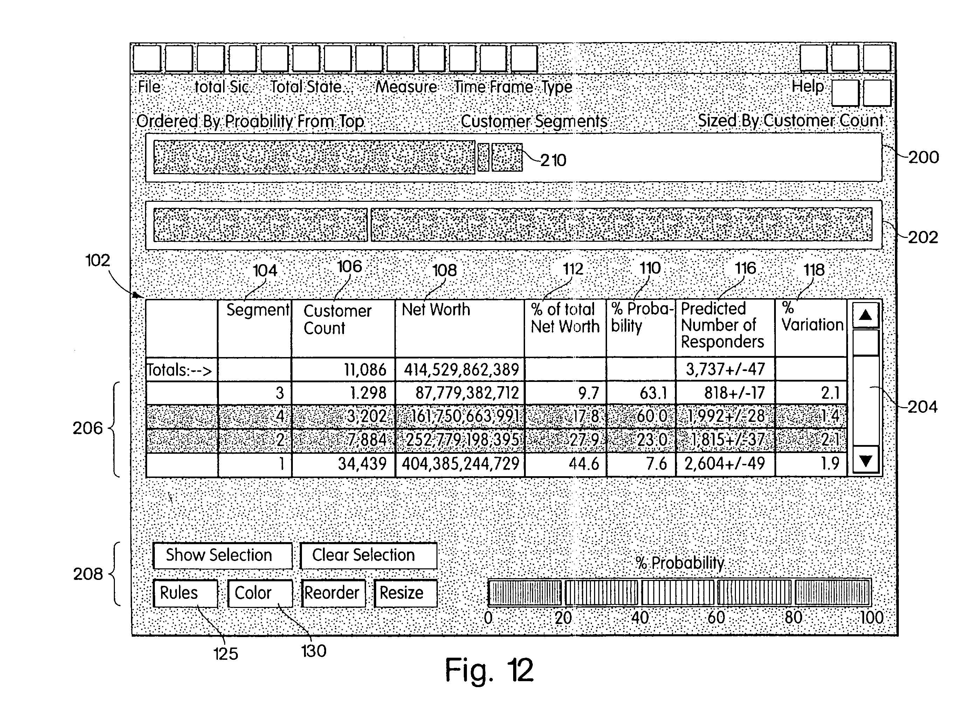

In some instances, the number of segments may be large, limiting the ability to create effectively a display object for a segment. For example, the number of segments may be higher than one thousand, which is greater than the pixel resolution of most commonly used computer displays. In such a case, it may be desirable to show two segment bars 200 and 202 as shown in FIG. 12. The top segment bar 200 shows the entire range of segments, but groups together those segments having the same appearance. The second segment bar 202 is generated as if the segments shown are extracted from the database. The table 102 is provided with a scroll bar 204 which allows a user to scroll through rows of the table presented. The user selects segments from the table to appear in the bottom segment bar 202. Additionally, a third set of display objects may be generated and displayed at 206. Each of these display objects is the colour of its corresponding display object generated for the segment bars 200 and 202, but each has the same size. Such display objects provide a visual connection between the rows of the table 102 and the segment bars 200 and 202. Such display objects may also be used in the embodiment of FIG. 7.

The segment bars 200 and 202 also have a visual link in the form of one or more highlight bars 210 on the segment bar 200. These highlight bars 210 indicate the portions of the segment bar 200 to which the display objects of segment bar 202 correspond. The position of the highlight bars 210 and display objects in segment bar 202 may be determined by user selection of segments from the table 102.

The maximum number of segments to be represented by the second segment bar depends on the resolution and size of the computer screen on which it is to be displayed. Using a display that is about 640 pixels wide, for example, about twenty segments may be efficiently represented in a segment bar. In such a case, assuming that the database is multidimensional and has a segmentation dimension, segment bar 202 is a representation of about twenty segment members of the segment dimension. Their size, appearance and position are determined by a display object generator as in FIG. 8. Additionally, the size and position of the highlight bar 210 is determined in a similar manner by reference to more than one display object. As an alternative, two or more segment bars may be used to illustrate each of multiple segmentations. Another set of buttons, as indicated at 208 may be used to provide additional command options to a user, such as to select a colour map (130), show rules (125), reorder or resize the display, select segments, select members of other dimensions, etc.

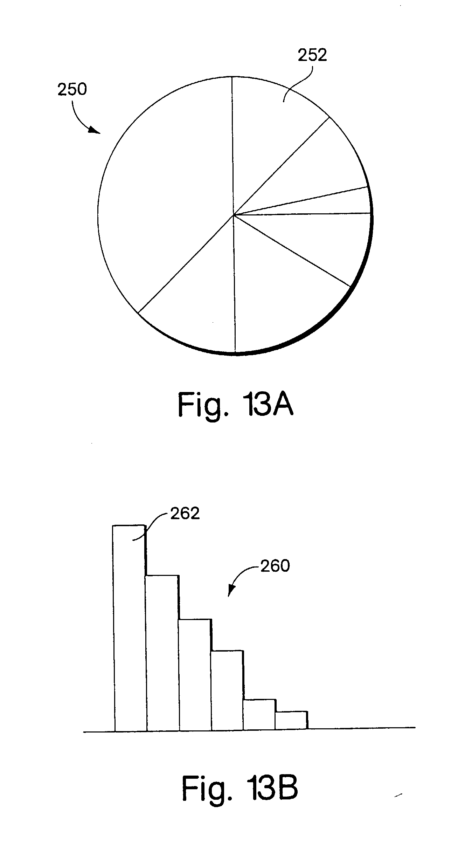

There are several other ways to represent display objects and their relative importance. A variety of shapes may be used. Other examples include a pie chart such as shown in FIG. 13A. In FIG. 13A a pie chart 250 includes a display object 252 for each segment. The size of the display object 252 is based on its size factor relative to the other size factors for other segments. As in the segment bars of FIGS. 7 and 12, the appearance of display object 252 is based on a segment value such as a segment aggregate or a statistical measure. The order or position of the display object 252 relative to other display objects may be determined according to some reference point and a direction, e.g., the top centre and clockwise, and according to the position factor.

Another example is a bar chart such as shown in FIG. 13B. In FIG. 13B a bar chart 260 includes a display object 262 for each segment. The size of the display object 262 is based on its size factor relative to the other size factors for other segments. As in the segment bars of FIGS. 7 and 12, the appearance of display object 262 is based on a segment value such as a segment aggregate or a statistical measure. The order or position of the display object 262 relative to other display objects may be determined according to a convention, e.g. left to right, and according to the position factor.

The use of such a visualization tool for viewing database variables dimensioned by the segmentation of the database provides distinct advantages. It is possible to view quickly the segments of a database which are important, along with the significant characteristics of the segments. The visualization of such information assists in making decisions and analysis based on the database information, including market performance analysis and market predictions.

Having now described a few embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention as defined by the appended claims and equivalents thereto.

Each feature disclosed in the description, and (where appropriate) the claims and drawings may be provided independently or in any appropriate combination.

## Claims

1. A graphical user interface for a computer database processing system which identifies segments of a computer database, wherein each segment is defined by a selection criterion and wherein an application of a selection criterion to the computer database provides at least one segment value for the segment computed from database variables of entities in the segment, the graphical user interface comprising:
means for generating a display object for each segment, wherein the display object has a size determined according to the at least one segment value and an appearance determined according the at least one segment value; and
means for displaying the display object of each segment in an order according to the at least one segment value.

2. A computer-implemented process for generating a display for segments of a computer database, wherein segments are defined by a computer database processing system, wherein each segment is defined by a selection criterion, and wherein an application of a selection criterion to the computer database provides at least one segment value for the segment computed from database variables of entities in the segment, the process comprising the steps, performed by a computer, of:
generating a display object for each segment, wherein the display object has a size determined according to the at least one segment value and an appearance determined according to the at least one segment value; and
displaying the display object of each segment in an order according to the at least one segment value.

3. A graphical user interface for a computer database processing system which identifies segments of a computer database, wherein each segment is defined by a selection criterion, and wherein an application of a selection criterion to the computer database provides at least one segment value for the segment computed from database variables of entities in the segment, the graphical user interface comprising:
a display object generator having an input for receiving the at least one segment value and an output providing a display object for each segment, wherein the display object has a size determined according to the at least one segment value and an appearance determined according to the at least one segment value; and
a display, connected to the display object generator, having an input for receiving an indication of the display object and for displaying the display object of each segment in an order according to the at least one segment value.

4. The graphical user interface of claim 3, wherein the display objects are rectangular and are displayed contiguously.

5. The graphical user interface of claim 3, wherein the display objects form a pie chart.

6. The graphical user interface of claim 5, wherein the display objects form a bar chart.

7. The graphical user interface of claim 3, further comprising means for user selection of a factor to define order, size or appearance and means for recalculation and redisplay of the display objects.

8. The graphical user interface of claim 3, wherein the segment value includes a segment aggregate over database variables and a statistical measure which indicates how well an entity in a segment meets target conditions.

9. The graphical user interface of claim 8, wherein the statistical measure is a probability indicating the likelihood that an entity in the segment meets target conditions.

10. The graphical user interface of claim 8, wherein the statistical measure is an average measure for a segment entity.

11. The graphical user interface of claim 10, wherein the statistical measure is an average rate for a segment entity.

12. The graphical user interface of claim 3, further comprising means for user selection of one or more of the displayed objects, and means for displaying selection criteria associated with the segments corresponding to the selected display object.

13. The graphical user interface of claim 3, further comprising means for user selection of one or more of the displayed objects, and means for recalculating display objects as restricted to the segments associated with the selected display objects.

14. The graphical user interface of claim 3, further comprising means for user selection of members of a selected dimension of the computer database other than the segment dimension, and means for recalculating segment values and for recalculating and redisplaying display objects of the segments according to the recalculated segment values as restricted to the selected members of the selected dimension.

15. The graphical user interface of claim 3, wherein the computer database is a multidimensional computer database and a dimension of the database is the set of all segments.

16. The graphical user interface of claim 3, further comprising means for user selection of display objects, and means for recalculation and redisplay of a second set of display objects wherein size and position of the second set of display objects is determined according to segment values for only those segments corresponding to the selected display objects.

17. The graphical user interface of claim 3, further comprising a second display object for each segment having an appearance corresponding to the appearance of the first display object for the segment, wherein the second display object for each segment has the same size and is positioned adjacent to other data of the segment on the display to provide a visual connection between the data of the segment and the first display object.
